# EUROPEAN PATENT SPECIFICATION

(11) **EP 1 042 834 B1**
(45) Date of publication and mention of the grant of the patent: **10.04.2002**
(21) Application number: 99901001.0
(22) Date of filing: 04.01.1999
(51) Int. Cl.: H01M 6/06, H01M 2/16, D21H 17/29, D21H 17/07

(54) **SEPARATORS FOR ZINC CARBON CELLS**
SEPARATOREN FÜR ZINK-KOHLE BATTERIEN
SEPARATEURS POUR PILES AU CARBONE DE ZINC

(30) Priority: 02.01.1998 GB 9800059
(43) Date of publication of application: 11.10.2000
(73) Proprietor: Ever Ready Limited, Southgate London N14 5AQ (GB)
(72) Inventor: RANDELL, Christopher, Fred, Newton Hall, Durham DH1 5SP (GB); WHITE, Neal, Charles, Leazes Lane, Northumberland NE46 3AT (GB)
(74) Representative: Lord, Hilton David
(86) International application number: GB9900014
(87) International publication number: WO9935700

(56) References cited:
- EP-A- 0 603 727
- WO-A-96/38867
- WO-A-98/07204
- GB-A- 1 418 866
- US-A- 3 877 993
- US-A- 5 645 611

## Description

The present invention relates to electrochemical cells having coated paper separators, wherein the separator coating comprises a starch and an additive, as well as to such separators and to methods for the manufacture of such cells.

In the drive to improve the safety and performance characteristics of dry cell batteries (also referred to herein as zinc carbon, or carbon zinc, batteries), various ingredients of the mix of the cell have been investigated, such as manganese dioxide, and various additives have been incorporated, in order to compensate for reducing the amount of mercury used. What was not previously investigated in any detail was the separator, or the coating of the separator. This is primarily because the only previously perceived purpose that the separator serves is preventing direct electrical contact between the two electrodes while, at the same time allowing ionic contact.

What we have established is that, surprisingly, the separator and the coating of the separator can very substantially affect the performance and safety features of a cell, to the extent that the cells are even improved in the fresh SCA (Short Circuit Amperage) test.

In WO 96/38869 published 5 December 1996, we describe the advantages of making the coating of the separator from highly cross-linked starch, such as Vulca 90 (Trade Mark of National), along with gellants, such as CELACOL B1209 (Trade Mark of Courtauld), which do not decompose during storage in zinc chloride solution. In addition, in WO 96/38867 published 5 December 1996, we have also established the desirability of incorporating a polyoxyalkylene nitrogen containing compound, or additive, such as Crodamet C20. Crodamet C20 is a monoamine having two polyoxyethylene side-chains, the number of oxyethylene units being, on average, 20 moles per mole of Crodamet C20.

Separators having coatings comprising the above ingredients result in dry cell batteries which perform markedly better than those comprising standard ingredients, in many standard battery tests.

In WO 97/17735 published 15 May 1997, we have also found that the nature of the paper used for the separator has a significant effect, and that high density papers which take at least four minutes to absorb a 50µl drop of water again perform better than any papers currently used in standard batteries.

The performance of cells containing such additives is generally, slightly down. In WO 98/07204 published 19 February 1998, we show that these problems can be substantially overcome if a cationic starch is used in the manufacture of the separator coating for cells. The storage properties of cells containing such separators are very substantially increased, with the cells often still performing well even after storage under the most stringent conditions. Further disclosed is the fact that it is possible to prepare cells which have equivalent, or even better, performance than previous cells, incorporating not only a majority of cationic starch into the separator coating, but also an additive having a hydro-lipophilic balance (HLB) of less than 17.

Previously, we had established that a particularly advantageous type of additive is generally classifiable as a surfactant, and is particularly preferably a polyoxyalkylene, nitrogen containing compound. Also, previously, we had established that it was particularly desirable for the starch to be highly cross-linked and that the most advantageous combination of highly cross-linked starch and additive was a starch such as Vulca 90 and a polyoxyethylene amine such as Crodamet C20. Crodamet C20 has an average of 20 oxyethylene units per amine and has an alkyl group on the amine averaging about twelve carbon atoms. Crodamet C20 has an HLB of 17.

Although cationic starches significantly improve storage properties of cells, under the Light Industrial Flashlight (LIF) test, performance was still approximately ten percent less than cells of the art, under certain circumstances. With non-cationic starches, additives having lower HLB values than 17 had somewhat increased the results obtained in the LIF test, but had also resulted in very considerably worsened leakage. However, with cationic starches, performance is substantially improved with additives having an HLB of less than 17 and problems with leakage do not become significant, even at an HLB of as low as 5 whereas cationic starch in combination with Crodamet C20 which, as stated above, has an HLB of 17, has a result, under the LIF test, of only 88 percent of cells of the art.

Without being bound by theory, it is likely that the relatively hydrophilic nature of the cationic starch allows a relatively hydrophobic (or lipophilic) additive with a low HLB to be used.

Cells containing an additive having an HLB of 14 perform very nearly as well as mercury containing cells, those containing an additive having an HLB of 11 perform effectively identically under the LIF test while cells containing additives having an HLB of 9 or lower can perform 10% better than standard mercury-containing cells under the LIF test.

Although it is now possible to produce zinc carbon cells containing no added mercury which perform as well as the mercury containing cells of the art, there is still a drive to reduce the amount of lead in the zinc cans, and also to reduce wall thickness of the cans. The problem here is that reducing either of the parameters leads to greater leakage under abuse conditions. Even where neither is reduced, there may still be observed residual abuse leakage, and it would be desirable to prevent, or reduce, this as much as possible.

We have now surprisingly discovered that, with high performance, zero mercury cells, the addition of a tetra-alkyl ammonium compound can substantially reduce abuse leakage.

Thus, in a first aspect, the present invention provides a coated paper separator for a zinc carbon cell, containing no added mercury, the coating comprising a combination of a cationic starch, a gellant and an additive having a hydrolipophilic balance of less than 17, characterised in that the additive is a polyoxyalkylene nitrogen containing compound, together with a quaternary, hydrocarbon-substituted ammonium compound.

In the alternative, the present invention provides a method for the manufacture of a zinc carbon cell, wherein after the incorporation of the separator and active ingredients, the separator comprising a suitable paper coated with a cationic starch, a gellant, an additive having a hydrolipophilic balance of less than 17, the additive being a polyoxyalkylene nitrogen containing compound, and a quaternary, hydrocarbon-substituted ammonium compound, the active ingredients including electrolyte solution in an active electrode mix, a further amount of electrolyte solution of a nature close to or identical with, and of a strength near to, that of the electrolyte present in the active electrode mix, is added before sealing the cell to reduce the possibility of abuse leakage, the further amount of electrolyte solution being between 1 and 2.5 grams of solution for a D-size cell.

For the avoidance of doubt, the abuse leakage test which was employed by the inventors to arrive at the present invention was the JIS (Japanese Industrial Standard) test which, for AA batteries involves continuous discharge across 5 ohms for 48 hours and which, for D cells, involves discharge across 2 ohms for 48 hours and observing leakage. Table 1, below, indicates how the results of this test were scored for D-size cells.

**TABLE 1**

| | LOCATION OF LEAKAGE | | | Score |
|---|---|---|---|---|
| | Extemally visible | | | 50 |
| 1 | Visible after jacket removal | | | 15 |
| 2 | Gassing audible on jacket Release | | | 7 |
| 3A | Serious | Under top cover | | 5 |
| 3B | Minimal | Under top cover | | 3 |
| 4A | Serious | Under bottom cover | | 5 |
| 4B | Minimal | Under bottom cover | | 3 |
| 5A | Serious | Between PVC & Can | still wet | 3 |
| 5B | Minimal | Between PVC & Can | still wet | 2 |
| 6A | Serious | Between PVC & Can | dried out | 1 |
| 6B | Minimal | Between PVC & Can | dried out | 0 |
| 7A | Serious | In air space | still wet | 3 |
| 7B | Minimal | In air space | still wet | 2 |
| 8A | Serious | In air space | leakage gelled | 2 |
| 8B | Minimal | In air space | leakage gelled | 1 |
| 9A | Serious | In air space | dried out | 1 |
| 9B | Minimal | In air space | dried out | 0 |
| 10A | Serious | Can wall perforated | | 1 |
| 10B | Minimal | Can perforated | | 0 |
| 11A | Serious | Bottom of can perforated | | 1 |
| 11B | Minimal | Bottom of can perforated | | 0 |

Solution addition is typically performed once the active electrode mix has been incorporated into the open can, and may be performed before or after the incorporation of the current collector. In practice, if solution addition is performed before incorporation of the current collector, it is possible that splashing may occur, if the two events are carried out close together. Accordingly, it is generally preferred that solution addition is performed once all of the internal components of the battery have been incorporated into the can, but before the top cover is put in place.

For simplicity, the nature of the solution is close to, or identical with, the electrolyte already present in the active electrode mix, and will typically involve an aqueous solution of zinc chloride. The strength of the solution is near that of the electrolyte, and we have found that 25% w/v zinc chloride aqueous solution is acceptable, although a range of 15-35% may be used, more preferably, 20-30%.

The amount of solution which may be added will be determined by the size of the cell and, in Table 2, there is shown the effect of solution addition, just before sealing, in D cells.

**TABLE 2**

| Grams Solution | JIS Leakage |
|---|---|
| 0 | 60 |
| 0.8 | 70 |
| 1.5 | 32 |
| 2.3 | 44 |

Thus, it can be seen that a very small amount of solution added to the cell may, in fact, be counter-productive, whilst too much may be ineffective. In the case of D cells, a useful amount of solution; addition is between 1 and 2.5 grams, preferably 1.2 - 2 grams, and more particularly 1.4 - 1.8 grams, especially 1.5 grams of solution. This may be tailored, as appropriate, to other sized cells.

Without being bound by theory, it is believed that solution addition is effective to reduce abuse leakage by reducing the concentration of zinc chloride at the zinc/separator interface. During continuous abuse testing, zinc chloride concentration can build up to 50% or more at the zinc/separator interface. Solution addition can serve to increase the amount of water at the interface, which serves to reduce the concentration of zinc chloride. There is, thus, considerably less osmotic pressure at the end of the abuse test, thereby resulting in there being, actually less water to leak.

The quaternary, hydrocarbon-substituted ammonium compounds of the present invention will generally be referred to as tetra-alkyl ammonium compounds herein, as these are generally preferred.

The tetra-alkyl ammonium compounds of the present invention preferably comprise only one ammonium centre, but may comprise two or more, if desired. However, for manufacturing purposes, it is generally preferable to keep the number of ammonium centres to one.

Preferred compounds of the present invention comprise four alkyl groups disposed about an ammonium centre. However, the present invention also provides such compounds wherein the alkyl groups may be substituted, such as by halogen atoms and amino groups. Compounds are also provided where the alkyl groups may be replaced, such as with alkenyl and alkynyl groups or, preferably unsubstituted, aromatic groups, such as phenyl and benzyl. Where such replacement occurs, it is generally preferred that only one alkyl group is replaced.

In general, it is preferred that the tetra-alkyl ammonium compounds comprise four alkyl groups about a single ammonium centre with the only limitation being that it is possible to incorporate an appropriate amount of the compound into the coating for the separator. An appropriate amount is typically in the region of 0.1 - 5% w/v, more usually about 0.2 - 2% and usefully about 0.3 - 1.0%. In the accompanying Examples, 0.5% w/v is used.

In general, we prefer that the amount of carbon atoms substituting the ammonium centre is between 8 and 30 and, more preferably, between 12 and 25.

The alkyl groups may all be of a similar size, or of disparate sizes.

Tetra-alkyl ammonium compounds having the appropriate number of carbon atoms commonly comprise one long alkyl group and three shorter alkyl groups. The shorter alkyl groups are typically ethyl or methyl groups, especially methyl groups. The longer alkyl chains then comprise the remaining carbon atoms.

A suitable compound for use in the present invention is cetrimide (N,N,N-trimethyl-1-hexadecanaminium bromide) and its various analogous salts. Although cetrimide is not necessarily the best compound for use in the present invention, it is readily available at low prices, a particularly important consideration in the manufacture of batteries. In the event that other compounds become readily available, or should the skilled man wish to incorporate other compounds, for whatever reason, then we have established that stearimide is a particularly good additive, and this is illustrated in Table 3 below.

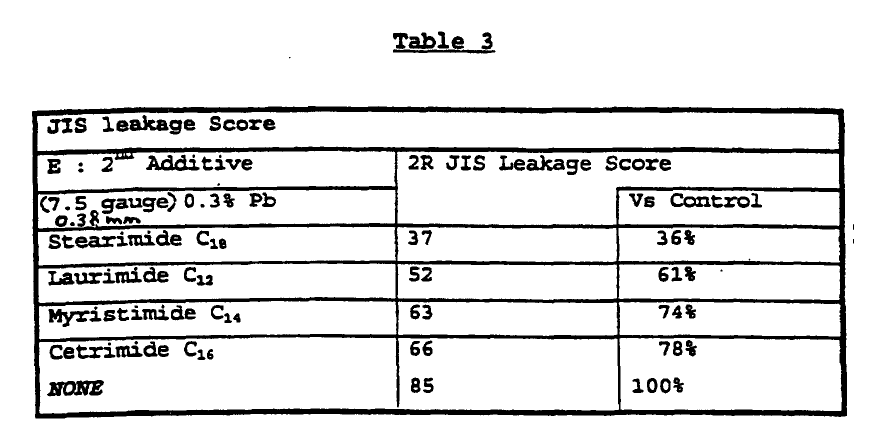

It can also be seen, from the above tests, that these additives have good effects without solution addition, and that a thin zinc can with reduced lead content can be used. In general, zinc cans on the market are 0.48 mm (9.5 gauge) and contain 0.4% lead. The cans used in Table 3 were 0.38 mm (7.5 gauge) and contained only 0.3% lead. Commercial production of such thin cans has not previously been possible, as it has not previously been feasible to sufficiently reduce leakage.

Thus, the present invention further provides zinc carbon cells having a can wall thickness of less than 0.48 mm (9.5 gauge). It is possible to produce cells with a can wall thickness of as little as 0.35 mm (7 gauge), but it is preferred that the can wall be between 0.38 and 0.45 mm (7.5 and 9 gauge), more preferably between 0.4 and 0.43 mm (8 and 8.5 gauge), 0.4 mm (8 gauge) being especially preferred.

It will also be appreciated that the additives of the present invention, being ammonium compounds, will generally be provided in the form of a suitable salt and, in this respect, it is preferred that the salt is. a halide, in order to avoid the possibility of compromising the ionic system of the cell. In general, however, appropriate salts will be apparent to those skilled in the art.

Without being bound by theory, it is believed that the tetra-alkyl ammonium compounds are increasing the hydrophilicity of the starch of the separator coating. In cells containing non-cationic starch, the short circuit amperage is significantly reduced,- and it is believed that the tetra-alkyl ammonium compound is binding tightly to the zinc. However, it is believed that cationic starch displaces the tetra-alkyl ammonium compound from the zinc, so that the additives serve to increase the hydrophilicity of the starch which, in turn, prevents drying out of the separator during storage and/or abuse testing.

It will be apparent from the foregoing that, whilst either solution addition, or the addition of a tetra-alkyl ammonium compound individual serve to reduce abuse leakage, it is necessary to use both together.

Preferred additives having an HLB of less than 17 ("low HLB additives"), have an HLB of 14 or less. Particularly preferred are additives with an HLB of less than 11, and the preferred HLB is 9, this value allowing a very similar LIF performance to additives having an HLB of as low as 5, but not being associated with the marginally increased leakage of additives having such a low HLB. Thus, a preferred range of HLB is from 5 to 11, particularly from 7 to 10, with 8 or 9, especially 9, being most preferred.

HLB results from the balance between such hydrophobic constituents as alkyl chains, and such hydrophilic components as oxyethylene units. In Crodamet C20, the average alkyl chain length is 12, whilst the average number of oxyethylene units is 20, effectively corresponding to two decameric polyoxyethylene units substituting an amine which is further substituted by a C₁₂ alkyl side chain. However, it will be appreciated that many compounds may make up the generic product known as Crodamet C20.

To reduce the HLB, the number of oxyethylene units can be reduced, and the length of the alkyl side-chain can be increased. Crodamet C20 is largely based on coconut alkyl groups which have, as stated above, an average chain length of 12. Crodamet T5, which contains five oxyethylene groups, has an HLB of 12. Accordingly, it is generally desirable to lengthen the average alkyl chain, so that we have found that tallow provides a useful alkyl length, having an average of about 18 carbon atoms. Ethylan TT203 is an amine having two oxyethylene substituents and an alkyl substituent having an average length of 18 carbon atoms, and this has an HLB of 5. For an HLB of 9, Crodamet T5 (having five oxyethylene units) is preferred. However, it will be understood that the alkyl chain length and the number of oxyethylene units can be varied in any suitable manner in order to obtain an additive with a desired HLB.

Further, for additives having a relatively low HLB, it is preferred that these additives should be non-ionic.

As used herein, the term "cationic starch" relates to any starch which has, in its molecular structure, at least one cation, on average, per starch molecule *in situ*.

Cationic starch is well known in the art and is disclosed, for example, in "Starch, Chemistry and Technology (Academic Press, Inc., Eds. Whistler, R., Bemiller, J., and Paschalle, E., second edition, 1984). In general, cationic starches can be prepared as disclosed in GB-A-2063282 and US-A-4613407.

US-A-4613407 describes the use of a combination of cereal and tuber cationic starches as a wet-end cationic additive for the manufacture of paper. Many uses are generally suggested for cationic starch in both references, but no use had previously been suspected for electrochemical cells.

As described in GB-A-2063282, cationic starches may be prepared by solubilising normal starch in water and exposing said starch to a suitable cationising agent under alkaline conditions. The agents illustrated in GB-A-2063282 are lower alkyl halohydrins and lower alkyl haloepoxy compounds, and these are suitable to yield cationic starches with viscosities higher than 1000 and even 2000 Brabender units, measured at a concentration of 5% v/v in water.

As described in the prior art, a generally preferable level of nitrogen content is between 0.2 and 2% w/w by dry weight of starch, although this can go up to as far as 2.8%. The only real ceiling is the practical limit imposed by chemical and cost considerations.

In general, we prefer that the separator coating be made substantially as is known in the art, but incorporating cationic starch in place of some or all of the starch component of the coating. Preferred paper and other ingredients are generally as described herein.

The cationic starch should form a majority of the starch component of the coating for the separator and, in general, we prefer that it should form all of the starch component, although it may occasionally be desirable to incorporate another component, such as Vulca 90.

In general, there is no restriction on the nature of the cationic starch of the present invention. However, it may generally be desirable that the cationic starch should not be readily soluble in water, in which case we prefer that it should not be at all soluble in water (at least cold water), and that it should not expand in the presence of water. However, the cationic starch should be at least partially cross-linked. Uncross-linked cationic starches do not perform satisfactorily, although there does not seem to be much difference in the performance of highly cross-linked starches and moderately cross-linked starches.

The starch may be any suitable starch. Many suitable starches are known, and include potato, corn, wheat and tapioca starch. The nature of the cations is also not important, although it.is generally preferred that the substance should not be toxic, for environmental reasons.

Suitable cations are the sulphonium, phosphonium and ammonium ions, of which the latter are preferred, and these can be introduced into the starch using suitably alkylated molecules. Suitable alkyl amines will tend to result in the starch being substituted by trialkyl ammonium groups under the acidic conditions present in a zinc carbon cell.

If the cationic starch used is in the form of, for example, dialkylamino substituted starch, then this precursor product may be converted into the cationic product by suitable treatment with acid, and this may be effected either *in situ*, or prior to incorporation of the separator into the cell.

A particularly preferred cationic starch of the present invention is a potato starch made by Roquette (Roquette Frères, 4 rue Patou, F-59022 Lille Cédex, France) under number LAB 2273, but other manufacturers also make appropriate grades of cationic starch.

Preferred gellants for use in the present invention are advantageously etherified cellulose derivatives which are generally stable in aqueous solutions of zinc chloride. Suitable examples of gellants for use in the present invention include: Tylose MH200K (Trademark of Hoechst), Tylose MH50, Culminal MHPC100 (Trademark of Aqualon) and Courtaulds DP 1209.

Particularly preferred etherified cellulose derivatives should ideally swell and gel substantially immediately and remain stable in the presence of water over long periods, such as described in WO 96/38869, and suitable etherified celluloses include methyl cellulose, ethyl cellulose, hydroxymethyl cellulose, carboxymethyl cellulose (including salts, such as the sodium salt), hydroxyethyl cellulose, ethylhydroxyethyl cellulose, methylhydroxyethyl cellulose, 2-hydroxypropyl cellulose, methylhydroxypropyl cellulose and 2-hydroxypropylmethyl cellulose.

We have also established that viscosity is an important factor in choosing a gellant. If the separator mix is outside certain viscosity limits, typically in the region of 3000 to 70000 cP (3 to 7.0 Pa.s), undesirable results and poor cells are usually obtained. Below 3000 cP (3 Pa.s), the mix is often so liquid that it soaks straight into the paper, which can lead to the tearing of the paper, for example. Above 70000 cP (70 Pa.s), the mix is generally too thick to spread onto the paper satisfactorily.

Accordingly, it is desirable to provide a mix which falls within the limits defined above, and this is generally possible by using an etherified cellulose derivative having a viscosity of between about 20 cP (0.02 Pa.s) and about 300 cP (0.3 Pa.s). As used herein (unless otherwise specified) the viscosity of a substance is defined in terms of a 2% w/v aqueous solution of that substance at 20°C at a neutral pH. Ideally the viscosity is between 50 and 100 cP (0.05 and 0.1 Pa.s).

The low HLB additives useful in accordance with the present invention are suitably nitrogen containing compounds of any type that is suitable to be substituted by one or more polyoxyalkylene groups. Whilst amine and ammonium compounds are preferred, especially the amine compounds, other compounds which have substitutable nitrogen bonds are also suitable, such as carbamoyl, diazo and *aci*-nitro compounds.

The individual alkylene moieties in the polyoxyalkylene substituents may be the same or different, but will generally be the same owing to the methods of manufacture employed for such compounds. Useful alkylene groups tend to be restricted to the ethylene and propylene groups, but the propylene groups are not as good as the ethylene groups at preventing gassing, so that polyoxyethylene nitrogen containing compounds are preferred, especially the polyoxyethylene amines. It will be appreciated that it is possible for any given polyoxyalkylene moiety to contain a mix of lower alkylene groups, such as methyl, ethyl and propyl. Where this is the case, then we prefer the average alkylene length to be two, or close to two, carbon atoms.

Regarding the nitrogen atom, it is particularly preferred that this is substituted by at least one polyoxyalkylene group and one saturated or unsaturated alkyl group. This group is preferably an alkyl or alkenyl group. There is generally no advantage to alkynyl groups, although these are also envisaged. The group may be straight or branched and may be substituted by one or more substituents, such as hydroxy groups and halogen atoms, but it is generally preferred that the alkyl group is unsubstituted. The level of saturation is ideally complete or there are only one or two carbon-carbon double bonds. It is also preferred that the alkyl group should be straight chain and contain from 1 to 30 carbon atoms, provided that the compound has an HLB of less than 17.

The low HLB additives may also contain more than one amine centre, in which case it is preferred that the individual amine groups are bridged by alkylene groups, preferably a short chain alkylene group, such as a trimethylene group.

The chain length of the polyoxyalkylene group is not particularly important, provided that the HLB is less than 17, but we prefer that the chain length should be between 1 and 5, preferably with an average length of between 1 and 3 and especially around 2 or 3. Furthermore, compounds derived from tallow amines are preferred, and tallow alkyl groups contain between around 18 carbon atoms.

Thus, the most preferred low HLB compounds are mono- and diamines wherein the free alkyl group has around 18 carbon atoms, the side chains are polyoxyechylene substituents having an average of 1 or 2 oxyethylene units each and, where the compound is a diamine, then the link between the two amine centres is trimethylene.

Any suitable paper may be used in accordance with the present invention, by which is meant any paper suitable for use as a separator. However, most papers used in conventional separators are from a single source of pulp and, while these papers are relatively cheap to manufacture, they tend to perform poorly in a number of tests. Nevertheless, we have established that it is possible to produce papers from a single source of pulp which perform well in tests, and such papers are characterised by their ability, at a temperature of about 20°C, to absorb a 50µl droplet of water in a period of between four and fifteen minutes. More preferably, this period is between five and fifteen minutes and is particularly preferably between five and ten minutes.

If the paper absorbs the droplet of water in less than four minutes, then the density of the paper tends to be too low, and poor results may be obtained. If the paper absorbs the droplet in greater than fifteen minutes, then this causes practical problems during manufacture, as the individual cells need to be voltage tested soon after assembly, and the delay in absorbing the electrolyte from the mix would mean that there would be an unacceptable storage time before the cells could be tested.

The characteristics of the papers which have the necessary absorption tend to be those of high beat and high density. Beating is performed on the pulp prior to formation of the paper, and the degree of beating can be measured by the use of the "Canadian standard freeness tester". The test is T 227m-58 of the Technical Association of the Paper and Pulp Industry and is described, for example, in "A Laboratory Handbook of Pulp and Paper Manufacture". (Auth. J. Grant, Pub. Edward Arnold, 2nd Ed. 1961, pp. 154 *et seq*.)

Conventional papers, such as Enso 80, have a density typically in the region of 0.5g/cm³, and even PBDE100 only has a density of 0.62g/cm³. However, both papers may be used in accordance with the present invention, although higher density papers are preferred.

The single pulp source papers which are preferred for the present invention have densities typically of 0.64g/cm³ and above, with preferred densities being between about 0.65 and about 1g/cm³, and more preferred densities being between about 0.65 and about 0.9g/cm³, although there tends to be very little to choose in this particular range of densities. For example, one particularly preferred paper of the present invention is made by Cordier (product code COK∼70) and has a density of 0.64g/cm³, and another particularly preferred paper of the present invention is made by Munksjo (product code 114440) and has a density of 0.76g/cm³.

A list of some of the preferred papers useful in the present invention is as follows:

| | |
|---|---|
| Cordier | COK- 60 |
| Cordier | COK- 70 |
| Sibille Dalle | 58060 (hereafter "SDMF") |
| Munksjo | 114440 |
| Munksjo | 114770 |
| Tervakoski Oy | Tertrans N75 0,75 |
| Tervakoski Oy | Terkab E70 10 |

The Cordier papers are available from Papierfabrik Cordier GmbH, Pfalz, Germany; the Sibille Dalle papers are available from Sibille Dalle, Vitry sur Seine, France; the Munksjo papers are available from Munksjo Paper AB, Jonkpong, Sweden; and the Tervakosko papers are available from Oy, Tervakoski, Finland.

Papers having a density of less than about 0.6g/cm³ tend to yield poor results in the tests, whilst papers with densities in excess of about 1.0g/cm³ tend to adsorb in greater than 15 minutes in the water droplet absorption test.

In general, cells incorporating the separators with cationic starch still remain functional under adverse storage conditions. In one test, there was a 0% failure rate even after 26 weeks at 45°C. While not being bound by theory, it seems likely that this exceedingly good result is due to the interface between the separator and the can remaining moist. This is enhanced by the separators of the present invention. Other separators of the art tend to dry out, even though the overall moisture content of the battery remains substantially the same. This is a problem which had previously been recognised, but which had defied all attempts at resolution to date.

When using cationic starches, the quality of manganese dioxide is not as important as in other cell constructs. Thus, relatively cheap sources of electrolytic manganese dioxide (EMD) can be used.

It will be appreciated that the present invention also provides electrochemical cells comprising separators of the present invention. There is also provided a coating mix suitable for the manufacture of coated separators of the present invention, said mix comprising cationic starch and a tetra-alkyl ammonium compound.

Typical cells in which the separators of the present invention can be used include primary and secondary zinc carbon cells, including those cells known as Leclanché and zinc chloride cells, as well as alkaline cells. The electrolyte in zinc carbon cells is typically as follows: Leclanché electrolyte - 5-20% zinc chloride, 30-40% ammonium chloride, remainder water; zinc chloride electrolyte - 15-35% zinc chloride, 0-10% ammonium chloride, the remainder water. Some other suitable cells for use in the present invention are described in Chapter 5 of the Handbook of Batteries and Fuel Cells (edited by David Linden, published by McGraw Hill).

Cells may have any suitable configuration, such as round, square or flat.

The present invention will now be illustrated with respect to the accompanying, non-limiting Examples wherein percentages are by weight, unless otherwise specified. The Test Examples are preceded by certain Test Protocols appropriate to the Test Examples. The zinc cans used in the present Examples are either 9.5 gauge (0.48 ± 0.03mm) and comprise 0.4% lead and 0.03% manganese or are 7.5 gauge (0.38 ± 0.03mm) and comprise 0.4% lead and 0.03% manganese. The mix for the cathode typically comprises 52% manganese dioxide, 0.4% zinc oxide, 6% acetylene black and 41.6% zinc chloride solution (26.5% zinc chloride w/v). Otherwise, cells are generally manufactured in accordance with EP-A-303737.

### Test Protocols

### Preparation of Separators

The first step in the preparation of a separator is to prepare the paste to be used for the coating of the paper. The formulations used in the present Examples were as follows:

| | |
|---|---|
| Water | 64.3% |
| Low HLB Additive (Tallow 5 or 8, unless otherwise specified) | 0.5% |
| Tetra-alkyl ammonium compound | 0.5% |
| Gellant (as specified) | 3.1% |
| Starch (generally Vulca 90 or Roquette 2273, unless otherwise specified) | 32.1% |

The following method was employed for making up the paste: mix the dry ingredients then add to the water and organic additive and place the resulting mixture in a paddle mixer, such as a Hobart mixer, and mix until a smooth paste is obtained.

The separator paste is then coated onto the chosen paper. The technique used in the Examples is to run the coated paper between two rollers set apart by a predetermined distance in order to provide the desired coating weight when dry. The rollers are suitably set so that they run in opposite directions, with the forward roller running fastest. A suitable coating machine is made by Dixon's (Dixon's Pilot Coating Machine Model 160, UK).

Suitable coating weights will be apparent to those skilled in the art. However, we prefer a dry coating weight of around 40gm⁻² for potato starches and 20gm⁻² for corn starches.

The coated paper is then dried either by oven-drying at 100-140°C and/or by steam drum-drying at 100-150°C.

Final drying is by steam drum drying. Use of an adhesive, such as polyvinyl pyrrolidone (PVP), together with steam drum drying, greatly assists adhesion of the coating to the paper.

In the following Examples, various industry standard tests were employed. The cells tested were D-size, unless otherwise specified. Where not already defined, these tests are as follows:

The mix used in the following Examples was 2.35 g H₂0/Ah, 0.34% (w/w) ZnCl₂/H₂O, with 100% PRC MnO₂.

Also in the following Examples, the potato starches are:

| | N-content | Cross-Linking |
|---|---|---|
| Roquette LAB2273 | 0.2% | Moderate |
| Roquette \|13-96 | 0.7% | Moderate |
| Roquette \|14-96 | 0 2% | Very High |

In the following Examples, two types of separator coating are employed, BB4 and BB7, both containing cationic cross-linked starch as the main ingredient and to which tetra-alkyl ammonium compounds are added:

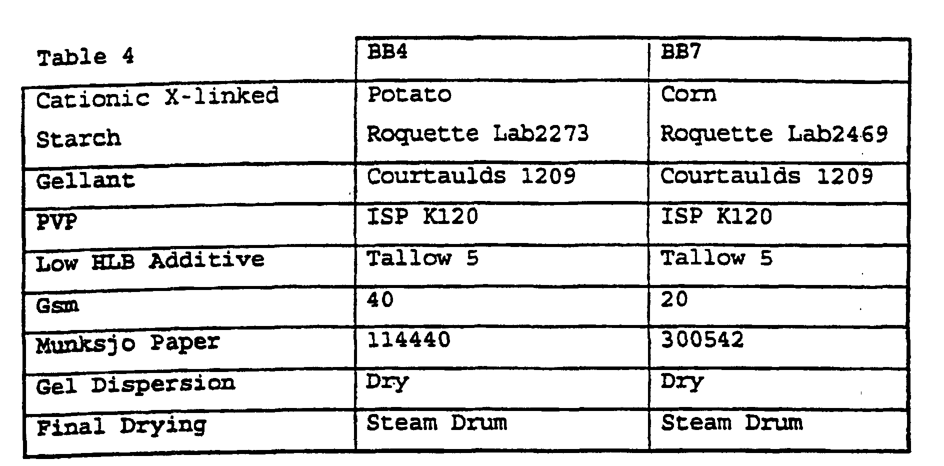

Although any tetra-alkyl ammonium compound may be added, cetrimide has been used herein, unless otherwise stated.

At some point, as the can wall is thinned catastrophic leakage occurs on abuse tests.

The following Examples illustrate how to reduce abuse leakage in thin wall (less than 0.4 mm (8 gauge)) with varying amounts of lead.

The following tests were performed on D size cells.

Abuse Leakage Test - Continuous discharge across 2Ω for 48 hours, followed by scoring according to Table 1 above.

LIF (Light Industrial Flashlight) - cells discharged across a resistance of 2.2Ω for 4 periods of 8 minutes in one hour, each period separated by about 2 minutes. This is repeated daily and the final result is given in terms of hours, being the cumulative total of eight minute discharge periods undergone until the failure voltage of 0.9V is reached.

Continuous Test - continuous discharge across 2.2Ω until failure occurs at 0.8V.

SCA - The cell is shorted and the current passed is measured on zero (very low) impedance meter. The resulting measurement is the SCA (Short Circuit Amperage) of the cell.

100% PRC (Chinese) electrolytic manganese dioxide (EMD) was used for the mix, in order to ascertain the effect of the invention in the least favourable circumstances possible.

Table 5 shows the effects of solution addition and cetrimide in 0.38 mm (7.5 gauge) cans containing 0.3% lead and using 40 gsm potato starch.

**TABLE 5**

| C : Solution Addition | D : Crodamet | E : Cetrimide | 2R JIS Leakage Score |
|---|---|---|---|
| 1.5g | Crodamet T8 | Yes | 47 |
| 1.5g | Crodamet T8 | No | 56 |
| 1.5g | Crodamet C20 | Yes | 74 |
| 1.5g | Crodamet C20 | No | 181 |
| 0g | Crodamet T8 | Yes | 118 |
| 0g | Crodamet T8 | No | 146 |
| 0g | Crodamet C20 | Yes | 146 |
| 0g | Crodamet C20 | No | 192 |

These results show that both solution addition and cetrimide have a profound effect on reducing abuse leakage in thinner cans with low quality EMD.

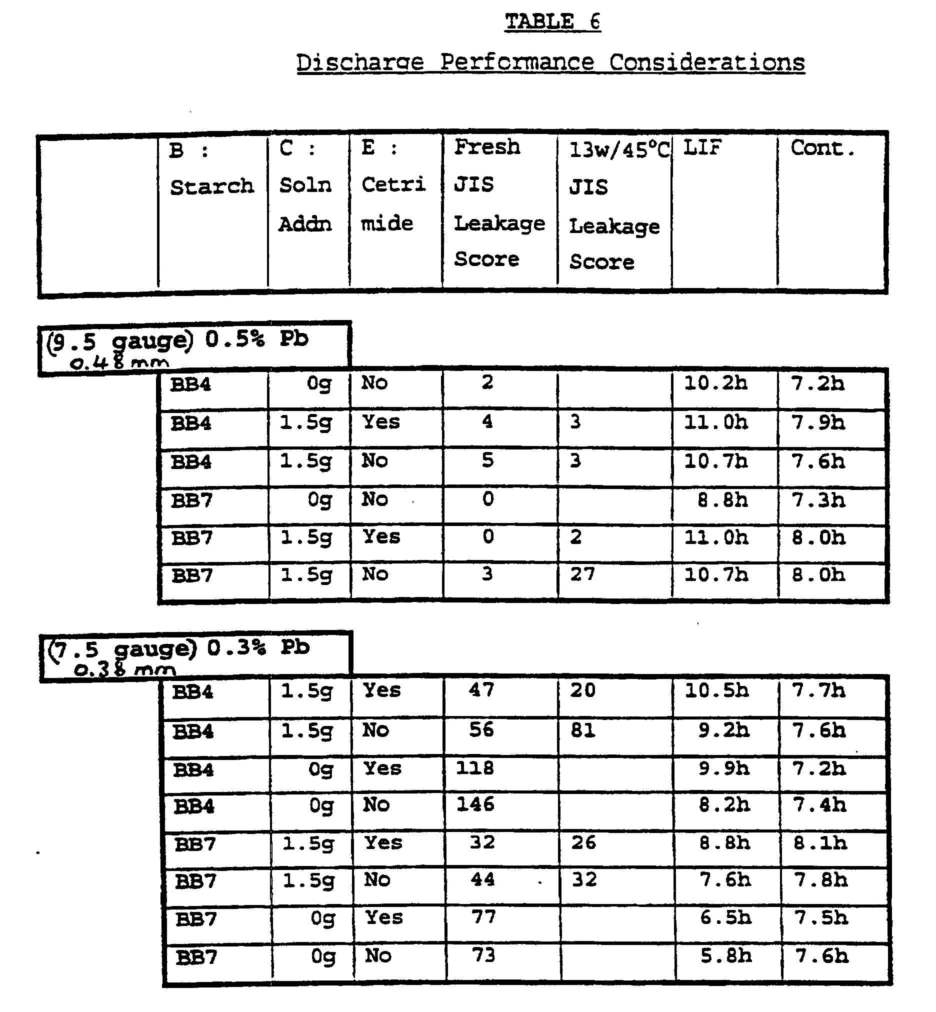

The above Table 6 shows the advantageous effects of cetrimide and solution addition on certain can sizes and compositions. In addition, it clearly shows beneficial effects on storage, even to the extent that better scores can be achieved after storage for 13 weeks at 45°C than for fresh cells.

### Top Washer / Parting Washer Material

The difference between non-absorbent parting washers and absorbent washers was assessed in Table 7.

**TABLE 7**

| JIS leakage Score | | | | |
|---|---|---|---|---|
| (7.5 gauge) + 0.3% Pb 0.38 mm | | | | |
| | C : Solution Addition | E : Cetrimide | G : Parting Washer | 2R JIS Leakage Score |
| | 1.5g | Yes | Non-absorbent | 47 |
| | 1.5g | Yes | Absorbent | 102 |
| | 1.5g | No | Non-absorbent | 56 |
| | 1.5g | No | Absorbent | 151 |
| | 0g | Yes | Non-absorbent | 118 |
| | 0g | Yes | Absorbent | 165 |
| | 0g | No | Non-absorbent | 146 |
| | 0g | No | Absorbent | 135 |

It was established that absorbent parting washers increase abuse leakage considerably.

## Claims

1. A coated paper separator for a zinc carbon cell containing no added mercury, the coating comprising a combination of a cationic starch, a gellant and an additive having a hydrolipophilic balance of less than 17, **characterised in that** the additive is a polyoxyalkylene nitrogen containing compound, together with a quaternary, hydrocarbon-substituted ammonium compound.

2. A separator according to claim 1, wherein the cationic starch is cross-linked.

3. A method for the manufacture of a zinc carbon cell wherein after the incorporation of the separator and active ingredients, the separator comprising a suitable paper coated with a cationic starch, a gellant, an additive having a hydrolipophilic balance of less than 17, the additive being a polyoxyalkylene nitrogen containing compound, and a quaternary, hydrocarbon-substituted ammonium compound, the active ingredients including electrolyte solution in an active electrode mix, a further amount of electrolyte solution of a nature close to or identical with, and of a strength near to, that of the electrolyte present in the active electrode mix, is added before sealing the cell to reduce the possibility of abuse leakage, the further amount of electrolyte solution being between 1 and 2.5 grams of solution for a D-size cell.

4. A method according to claim 3, wherein solution addition is performed once all of the internal components of the battery have been incorporated into the can, but before the top cover is put in place.

5. A method according to claim 3 or 4, wherein the further added electrolyte solution is 15-35% w/v zinc chloride aqueous solution, more preferably, 20-30%, especially 25%.

6. A separator according to claim 1 or 2, wherein the ammonium compound is cetrimide (N,N,N-trimethyl-1-hexadecanaminium bromide) or an analogous salt thereof.

7. A separator according to claim 1 or 2, wherein the ammonium compound is stearimide or suitable salt thereof.

8. A zinc carbon cell having a can wall thickness of less than 0.48 mm (9.5 gauge) and comprising a separator according to claim 1 or claim 2.

9. A zinc carbon cell having a can wall thickness of less than 0.48 mm (9.5 gauge) and being made in accordance with any of claims 3 to 5 and preferably comprising a separator as defined in claim 1 or 2.

10. A cell according to claim 8 or 9, having a can wall thickness of 0.35 mm (7 gauge).

11. A cell according to claim 9, having a can wall thickness of between 0.38 and 0.45 mm (7.5 and 9 gauge).

12. A cell according to claim 9, having a can wall thickness of between 0.4 and 0.43 mm (8 and 8.5 gauge), especially 0.4 mm (8 gauge).

13. A cell according to any of claims 8 to 12, as prepared by a method according to any of claims 3 to 5.

14. A cell according to any of claims 8 to 13, wherein the hydrolipophilic balance of the additive is from 5 to 11, preferably from 7 to 10, more preferably 8 or 9, especially 9.

## Patentansprüche

1. Trennelement aus beschichtetem Papier für eine Zink-Kohle-Batterie, die keinen Quecksilberzusatz enthält, wobei die Beschichtung eine kationische Stärke, ein Geliermittel und einen Zusatz mit einem hydrolipophilen Gleichgewicht von weniger als 17 aufweist, **dadurch gekennzeichnet, daß** der Zusatz eine stickstoffhaltige Polyoxyalkylenverbindung ist, zusammen mit einer quaternären, kohlenwasserstoffsubstituierten Ammoniumverbindung.

2. Trennelement nach Anspruch 1, wobei die kationische Stärke vernetzt ist.

3. Verfahren zur Herstellung einer Zink-Kohle-Batterie, wobei nach dem Einbringen des Trennelements und der Aktivsubstanzen, wobei das Trennelement ein geeignetes Papier aufweist, das mit einer kationischen Stärke, einem Geliermittel und einem Zusatz mit einem hydrolipophilen Gleichgewicht von weniger als 17 beschichtet ist, wobei der Zusatz aus einer stickstoffhaltigen Polyoxyalkylenverbindung und einer quaternären, kohlenwasserstoff-substituierten Ammoniumverbindung besteht, wobei die Aktivsubstanzen Elektrolytlösung in einem Aktivelektrodengemisch enthalten, eine weitere Menge Elektrolytlösung von einer Beschaffenheit, die derjenigen des im Aktivelektrodengemisch vorhandenen Elektrolyten nahekommt oder damit identisch ist, und von nahezu gleicher Stärke zugesetzt wird, bevor die Zelle abgedichtet wird, um die Möglichkeit des Auslaufens bei Fehlgebrauch zu vermindern, wobei für eine Zelle der Größe D die zusätzliche Menge Elektrolytlösung 1 bis 2,5 Gramm Lösung beträgt.

4. Verfahren nach Anspruch 3, wobei die Zugabe der Lösung erfolgt, sobald alle inneren Komponenten der Batterie in den Becher eingebracht worden sind, aber bevor der obere Zellendeckel aufgesetzt wird.

5. Verfahren nach Anspruch 3 oder 4, wobei die weiter zugesetzte Elektrolytlösung eine wäßrige Zinkchloridlösung mit einer Massendichte von 15-35 g/100 ml, stärker bevorzugt 20-30 g/100 ml, am stärksten bevorzugt 25 g/100 ml ist.

6. Trennelement nach Anspruch 1 oder 2, wobei die Ammoniumverbindung Cetrimid (N,N,N-Trimethyl-1-hexadecanammoniumbromid) oder ein analoges Salz davon ist.

7. Trennelement nach Anspruch 1 oder 2, wobei die Ammoniumverbindung Stearimid oder ein geeignetes Salz davon ist.

8. Zink-Kohle-Batterie mit einer Becherwanddicke von weniger als 0,48 mm (9,5 gauge), die ein Trennelement nach Anspruch 1 oder Anspruch 2 aufweist.

9. Zink-Kohle-Batterie mit einer Becherwanddicke von weniger als 0,48 mm (9,5 gauge), die nach einem der Ansprüche 3 bis 5 hergestellt ist und vorzugsweise ein Trennelement nach Anspruch 1 oder 2 aufweist.

10. Batterie nach Anspruch 8 oder 9 mit einer Becherwanddicke von 0,35 mm (7 gauge).

11. Batterie nach Anspruch 9 mit einer Becherwanddicke zwischen 0,38 und 0,45 mm (7,5 und 9 gauge).

12. Batterie nach Anspruch 9 mit einer Becherwanddicke zwischen 0,4 und 0,43 mm (8 und 8,5 gauge) insbesondere von 0,4 mm (8 gauge).

13. Batterie nach einem der Ansprüche 8 bis 12, hergestellt durch ein Verfahren nach einem der Ansprüche 3 bis 5.

14. Batterie nach einem der Ansprüche 8 bis 13, wobei das hydrolipophile Gleichgewicht des Zusatzes 5 bis 11, vorzugsweise 7 bis 10, stärker bevorzugt 8 oder 9, am stärksten bevorzugt 9 beträgt.

## Revendications

1. Séparateur à base de papier couché pour une pile zinc/carbone ne contenant aucun mercure ajouté, le couchage comprenant une combinaison d'un amidon cationique, d'un gélifiant et d'un additif ayant un rapport hydro-lipophile inférieur à 17, **caractérisé en ce que** l'additif est un composé azoté de polyoxyalkylène, avec un composé d'ammonium quaternaire à substitution hydrocarbonée.

2. Séparateur selon la revendication 1, dans lequel l'amidon cationique est réticulé.

3. Procédé de fabrication d'une pile zinc/carbone, dans lequel après l'incorporation du séparateur et des ingrédients actifs, le séparateur comprenant un papier approprié ayant un couchage composé d'un amidon cationique, d'un gélifiant et d'un additif ayant un rapport hydro-lipophile inférieur à 17, l'additif étant un composé azoté de polyoxyalkylène, et un composé d'ammonium quaternaire à substitution hydrocarbonée, les ingrédients actifs incluant une solution d'électrolyte dans un mélange pour électrode active, une quantité supplémentaire de solution d'électrolyte d'une nature proche de ou identique à, et d'une concentration proche de, celle de l'électrolyte présent dans le mélange pour électrode active, est ajouté avant scellement de la pile pour réduire la possibilité de fuites dues à un usage abusif, la quantité supplémentaire de solution d'électrolyte étant comprise entre 1 et 2,5 grammes de solution pour une pile de format D.

4. Procédé selon la revendication 3, dans lequel l'ajout de solution est effectué une fois que tous les composants internes de la batterie ont été incorporés dans le bac, mais avant que le couvercle supérieur ne soit mis en place.

5. Procédé selon la revendication 3 ou 4, dans lequel la solution d'électrolyte supplémentairement ajoutée est une solution aqueuse de chlorure de zinc à 15-35% p/v, plus préférentiellement à 20-30%, en particulier à 25%.

6. Séparateur selon la revendication 1 ou 2, dans lequel le composé d'ammonium est le cétrimide (bromure de N,N,N-triméthyl-1-hexadécylammonium) ou un de ses sels analogues.

7. Séparateur selon la revendication 1 ou 2, dans lequel le composé d'ammonium est le stéarimide ou un de ses sels appropriés.

8. Pile zinc/carbone ayant une épaisseur de paroi de bac inférieure à 0,48 mm (calibre 9,5) et comprenant un séparateur selon la revendication 1 ou la revendication 2.

9. Pile zinc/carbone ayant une épaisseur de paroi de bac inférieure à 0,48 mm (calibre 9,5) et fabriquée conformément à l'une quelconque des revendications 3 à 5 et comprenant de préférence un séparateur tel que défini dans la revendication 1 ou 2.

10. Pile selon la revendication 8 ou 9, ayant une épaisseur de paroi de bac de 0,35 mm (calibre 7).

11. Pile selon la revendication 9, ayant une épaisseur de paroi de bac comprise entre 0,38 et 0,45 mm (calibre 7,5 et 9).

12. Pile selon la revendication 9, ayant une épaisseur de paroi de bac comprise entre 0,4 et 0,43 mm (calibre 8 et 8,5), en particulier 0,4 mm (calibre 8).

13. Pile selon l'une quelconque des revendications 8 à 12, telle que préparée par un procédé selon l'une quelconque des revendications 3 à 5.

14. Pile selon l'une quelconque des revendications 8 à 13, dans laquelle le rapport hydro-lipophile de l'additif est de 5 à 11, de préférence de 7 à 10, plus préférentiellement de 8 ou 9, en particulier de 9.
